# EUROPEAN PATENT APPLICATION

(11) **EP 0 977 390 A2**
(43) Date of publication of application: **02.02.2000**
(21) Application number: 99440207.1
(22) Date of filing: 23.07.1999
(51) Int. Cl.: H04J 3/08

(54) **Circuit for dropping and inserting control bytes in SDH frames**

(30) Priority: 31.07.1998 IT TO980670
(71) Applicant: ALCATEL, 75008 Paris (FR)
(72) Inventor: Pais Golin, Orsola, 32041 Auronzo di Cadore (Belluno) (IT); Razzetti, Luca, 20099 Sesto San Giovanni, Milano (IT); Traverso, Giovanni, 23807 Rovagnate (Lecco) (IT)
(74) Representative: Schmidt, Werner Karl, Dipl.-Phys.

(57) **Abstract**

Circuit for dropping, inserting and elaborating control bytes in time division multiplexed frames, specifically SDH frames, where said control bytes are contained in overhead sequences of container sequences representing multiplexed tributary flows in said time division multiplexed frames, and where said drop, insert and elaboration circuit elaborates said control bytes to build operating statuses of the tributaries using storing means for such an elaboration. According to the present invention, said control byte drop, insert and elaboration circuit (1) comprises an arithmetical logic unit (U) operating in association with storing means comprising an external memory circuit (ERM).

## Description

The present invention relates to a circuit for dropping, inserting and elaborating control bytes in time division multiplexed frames, specifically SDH frames (Synchronous Digital Hierarchy), where said control bytes are contained in overhead sequences of container sequences representing tributary flows multiplexed in said time division multiplexed frames, and where said drop, insert and elaboration circuit elaborates said control bytes to build operating statuses of the tributary flows and uses storing means for such an elaboration.

In the last few years SDH protocol has become increasingly successful in the field of telecommunication networks.

As known, SDH frames consist of a so-called overhead section and of a portion of information to be transported inside the network, called 'payload'. In an SDH frame a plurality of plesiochronous tributary flows are multiplexed, with each flow being identified by a data sequence, i.e. a payload, and by an overhead sequence able to control the path, called "path overhead". Status information of said plesiochronous tributaries are represented by bytes belonging to the "path overhead". The assembly of "path overhead" and payload forms a container sequence called "Virtual Container".

For a clear understanding of the terminology reference should be made to the Recommendations contained in ITU-T G.707 and ETSI ETS 300-417 Standards.

As a result, in order to execute control functions for SDH frame traffic it is required to be able to insert ("source" operation) and drop ("sink" operation) said status information bytes or a portion thereof in several distributed points of the telecommunication network, so as to execute termination, adapting and monitoring functions of the connections. Moreover, it is specifically important to be able to execute said traffic control functions of SDH frames in real time. Real time elaboration means an elaboration carried out while each frame goes through a point where a network 'sink' or 'source' operation is implemented, in contrast with elaboration methods where a whole frame has to be stored to be able to execute its elaboration.

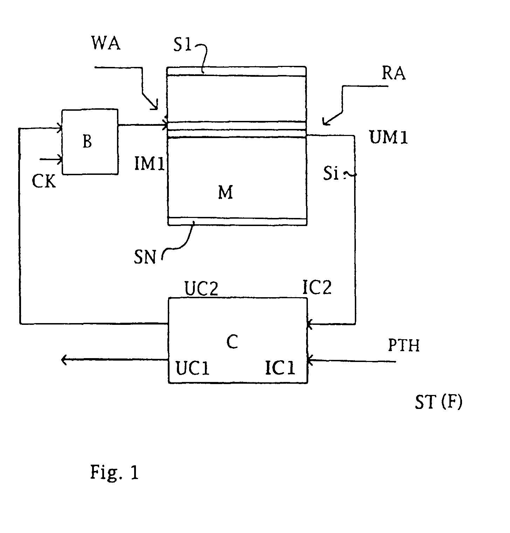

It is known to execute these operations according to a time division multiplexing method, whose implementation is represented in Fig. 1. A sequential circuit C interposed over a path PTH of an SDH frame ST containing N tributary flows F, with N being an integer, e.g. a frame STM_1, has one output UC2 connected with a write input IM1 of a RAM memory indicated with M through a bistable circuit B. An input IC2 of the sequential circuit C is connected with a read output UM1 of the RAM memory indicated with M. The memory M also receives a write address WA and a read address RA. Finally, the bistable circuit B receives a clock signal CK.

Control bytes, e.g. V5, J2 and N2 forming the above mentioned "path overhead" are dropped from the frame ST and statuses S1....Si....SN, reflecting the status of each i-th tributary flow F, are processed. Said statuses S1....Si....SN are stored in the memory M. At each clock signal interval CK, the sequential circuit C receives the i-th status Sᵢ of the i-th tributary flow F, also called present status, reading it from the memory M and elaborates it according to the new control bytes received at an input IC1 where frames ST buffered over the path PTH will arrive to.

Then an elaborated status Sᵢ₋₁, also called future status, is sampled and written to the subsequent clock signal interval CK through the bistable circuit B in the memory M. If the read address RA is i, then the write address WA is i-1.

This type of circuits is called time division multiplexed circuits as they are applied from time to time for elaboration of a specific tributary flow, according to the time plan derived from the sequence of the tributary flows themselves inside an SDH frame. The RAM memory employed is called status RAM.

However, time division multiplexed circuits have a serious drawback, since the status RAM has to contain information related to all the statuses composing the frame at all times. This clearly establishes a proportionality between the number of tributary flows that can be handled and the size of the status memory RAM. If a great number of tributary flows is multiplexed in the frame (63 VC12) the size of status RAM grows and will take too much space on the integrated circuit where also the sequential circuit and other circuits should be placed.

In such an instance it is not possible to use an external memory RAM as a status RAM since to this purpose an unacceptable number of connecting pins of the integrated circuit would be used all the same.

A further drawback is due to the inability of sharing memory resources of the status RAM to elaborate other multiframes.

Finally, still another drawback is due to the fact that using a time division multiplexing method the circuit remains disabled during the entire payload transfer, since it is only enabled for overhead bytes.

It is the object of the present invention to solve the above drawbacks and provide a circuit for control byte drop, insert and elaboration in time division multiplexed frames, specifically SDH frames, having a more efficient and improved performance.

In this frame, it is the main object of the present invention to provide a circuit for control byte drop, insert and elaboration in time division multiplexed frames, specifically SDH frames, allowing the use of a memory out of the circuit.

A further object of the present invention is to provide a circuit for control byte drop, insert and elaboration in time division multiplexed frames, specifically SDH frames, which allows to share external memory resources among several control byte detection circuits.

A further object of the present invention is to provide a circuit for control byte drop, insert and elaboration in time division multiplexed frames, specifically SDH frames, which executes functions also when the payload portion of the time multiplexed frame is available at the input.

In order to achieve such objects, the present invention provides a circuit for control byte drop, insert and elaboration in time division multiplexed frames, specifically SDH frames, incorporating the features of the annexed claims, which form an integral part of the present description.

Further objects, features and advantages of the present invention will become apparent from the following detailed description and annexed drawings, which are supplied by way of exemplifying and non limiting example, wherein:
- Figure 1 shows a basic diagram of a circuit for control byte drop, insert and elaboration in time division multiplexed frames, specifically SDH frames, according to the known state of the art;
- Figure 2 shows a basic diagram of a circuit implementing the control byte drop, insert and elaboration circuit in time division multiplexed frames, specifically SDH frames, according to the present invention;
- Figure 3 shows a basic diagram of circuit details of the circuit implementing the control byte drop, insert and elaboration circuit in time division multiplexed frames, specifically SDH frames, represented in Figure 2.

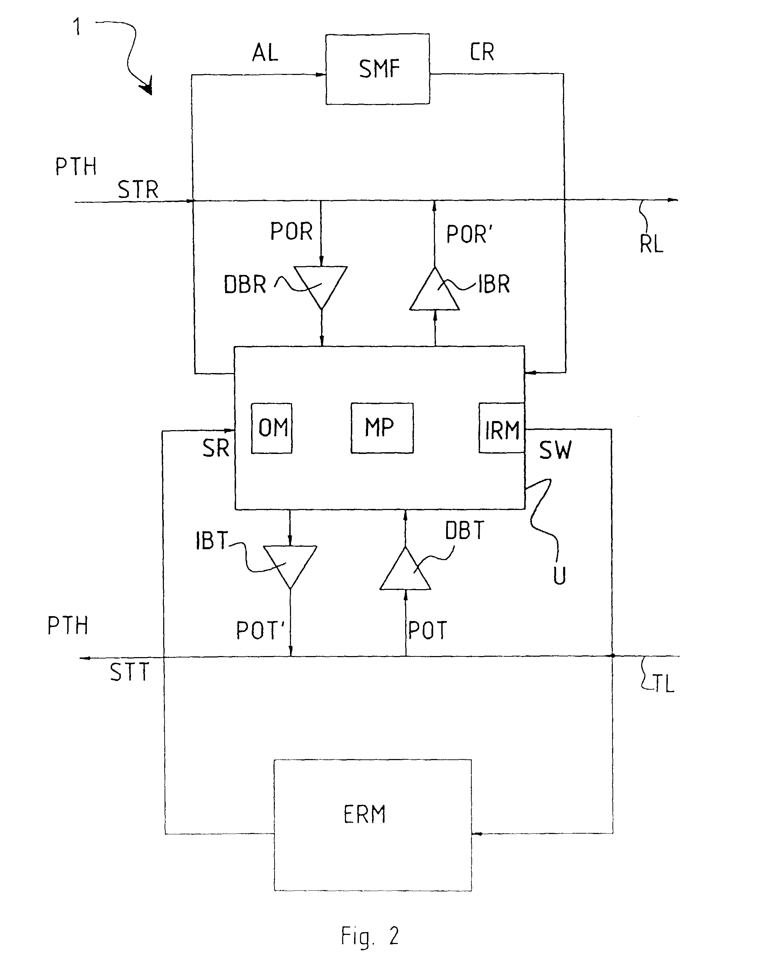

Figure 2 shows a control byte drop, insert and elaboration circuit 1 in time division multiplexed frames, specifically SDH frames, according to the present invention.

Said control bytes drop, insert and elaboration circuit 1 operates between a reception line RL and a transmission line TL, which represent the two directions of the path PTH, e.g. between two adjacent nodes. A received SDH frame STR and a transmitted SDH frame STT are sent over said reception line RL and transmission line TL.

The circuit 1 for dropping, inserting and elaborating control bytes comprises drop buffer circuits DBR connected between the reception line RL and an arithmetical logic unit U, able to drop an overhead sequence POR, i.e. the "overhead path" of the received SDH frame STR and send it to the arithmetical logic unit U. Accordingly, drop buffer circuits DBT connected between the transmission line TL and an arithmetical logic unit U are provided, which are able to drop an overhead sequence POT of the transmitted SDH frame STT and send it to the arithmetical logic unit U.

Thus, insert buffer circuits IBR connected between the logic unit U and the reception line RL are provided, such circuits being able to insert an elaborated overhead sequence POR' on the received SDH frame STR. Accordingly, insert buffer circuits IBT connected between the logic unit U and the transmission line TL are provided, which circuits being able to insert an elaborated overhead sequence POT' on the transmitted SDH frame STR.

It is to be noted how the functions that said control bytes drop, insert and elaboration circuit 1 can execute on overhead sequences POR and POT to obtain their respective elaborated overhead sequences POR' and POT' comprise the following adapting, termination and monitoring functions FU, such as indicated by way of example in the above Recommendations ITU-T G.707 and ETSI ETS 300-417:
- on the received SDH frame STR
   - LPOM (Lower Path Overhead Monitoring)
   - LSUT (Lower path Supervisory Unequipped Termination) ('sink' type function)
   - LTCM (Lower path Tandem Connection Monitoring)
   - LTCT (Lower path Tandem Connection Termination) ('source' type function)
   - LPT (Lower Path Termination) ('sink' type function)

The arithmetical logic unit U comprises a microprocessor MP supervising the operation of said arithmetical logic unit U, and an internal RAM Memory IRM, as well as a ROM memory being indicated by OM.

The arithmetical logic unit U is connected with a configuration memory SMF, from which configuration signals CR are received and alarm signals AL are sent to.

Then the arithmetical logic unit U is connected with an external RAM memory ERM, where write statuses SW are sent to and from which read statuses SR are dropped. The external RAM memory ERM is not integrated on the same circuit containing the control bytes drop, insert and elaboration circuit 1, i.e. on the same "gate array". The external RAM memory ERM could be a common RAM memory available on the market.

Operation of the control byte drop, insert and elaboration circuit 1 will now be detailed with reference to the received SDH frame STR, on which a 'sink' or drop operation is executed.

The control byte drop, insert and elaboration circuit 1 sources the data contained in the overhead sequence POR from the reception line RL through a drop buffer circuit DBR. The drop buffer circuit DBR is read by the arithmetical logic unit U at regular time intervals and according to an appropriate sequence, till it finds overhead sequence data POR not yet elaborated. In this instance, the arithmetical logic unit U sources the corresponding read status SR from the external RAM memory ERM, executes status elaboration according to the information contained in the portion of the overhead sequence POR available in the drop buffer circuit DBR and as indicated by the configuration signals CR. Should a "source" type operation be required, the data of the new elaborated overhead sequence POR' are then possibly sent to the insert buffer circuit IBR, which has a temporary storing function for a correct resynchronization with the corresponding tributary flows F.

During "sink" operation alarm signals AL are also generated, which signals are transmitted to the configuration memory SMF. Said alarm signals AL are e.g. signals TSF (Trail Signal Fail) and TSD (Trail Signal Degrade).

In brief, "sink" operation of the control bytes drop, insert and elaboration circuit 1 can be summarized by the following operations OP developed by the arithmetical logic unit U:
- loading of the read status SR from the external RAM memory ERM;
- elaboration of the read status SR as a function of the overhead sequence data POR read from the drop buffer circuit DBR;
- backup in a write status SW in the external RAM memory ERM;
- alarms update in the configuration memory SMF by sending alarm signals AL.

If a "source" or insert operation takes place, then operations OP may include:
- loading the read status SR from the external RAM memory ERM;
- updating of the read status SR;
- backup in a write status SW in the external RAM memory ERM;
- inserting the new overhead sequence byte POR' in the received SDH frame STR through the insert buffer circuit IBR.

Said operations OP are stored inside the arithmetical logic unit U in the ROM type memory OM.

On the contrary, the internal RAM memory IRM is employed to temporarily store information to be transmitted from the reception line RL to transmission line TL and vice versa, e.g. in the remote criteria insert operation, or transmitted from one function to another on the same line, such as the signal SSF (Server Signal Fail).

The control bytes drop, insert and elaboration circuit 1 is appropriate to execute adapting and termination functions for a so-called "lower level" (VC12/VC2/VC3) of four STM_1. The use of an external RAM memory ERM is possible with the use of buffer circuits DBR, IBR, DBT, IBT, which temporarily host the overhead sequence bytes POR and POT, whereas the arithmetical logic unit U acquires the pertaining status. Therefore, the use of buffer circuits DBR, IBR, DBT, IBT will be necessary due to the access time to the external RAM memory ERM, which has to dilute functions FU over several time intervals of the clock signal ruling the arithmetical logic unit U.

Drop buffer circuits DBR, DBT are obtained through positional buffers, which reserve a certain amount of memory, whose size varies according to the elaborations to be executed on that byte, to each overhead sequence byte FOR or POT that may be dropped.

If information on bytes V5, J2 and N2 has to be dropped from the overhead of VC12 or VC2, then drop buffer circuits DBR, DBT have to be provided with the following composition:

| J2 STR | V5 STR | N2 STR | V5 STT | J2 STT | N2 STT |
|---|---|---|---|---|---|
| 10 bits x 63 words | 16 bits x 63 words | 1 bits x 63 words | 1 bits x 63 words | 10 bits x 63 words | 16 bits x 63 words |

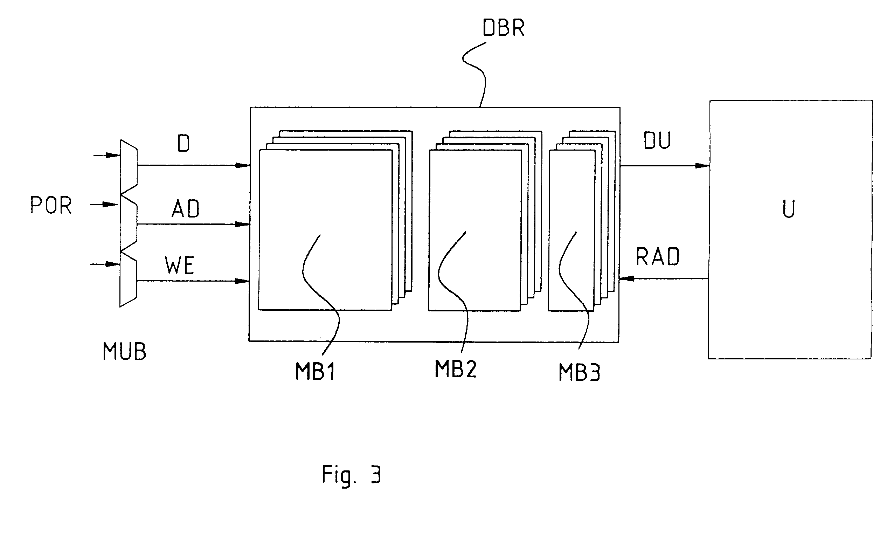

Figure 3 represents a block diagram of the drop buffer circuit DBR, which is obtained through a positional buffer, i.e. wherein are allocated memories with fields having lengths which are different according to each information type to be allocated and as many duplicates of the memory blocks are prepared as the number of flows to be elaborated. The drop buffer circuit DBR comprises three synchronous RAM memory blocks MB1, MB2, MB3 whose size is appropriate to receive the significant bits contained in bytes V5, J2 and N2 of the overhead sequence POR contained in the received SDH frame STR. Therefore, the three synchronous RAM memory blocks MB1, MB2 and MB3 are sized 16 bit x 63 words, 10 bit x 63 words, 1 bit x 63 words, respectively.

The three synchronous RAM memory blocks MB1, MB2 e MB3 are driven by a multiplexing block MUB, which receives at its input the overhead sequence POR and outputs data D, a write address AD of data D in the synchronous RAM memory blocks MB1, MB2, MB3 and an enabling signal WE.

Whenever a multiframe sequence composed of four frames STM_1 is available as above, then four duplicates of said three RAM synchronous memory blocks MB1, MB2 and MB3 must be provided.

The drop buffer circuit DBR will then communicate with the arithmetical logic unit U to which it supplies data DU to be elaborated after a read address has been sent by said arithmetical-logic unit U.

In this instance the three RAM synchronous memory blocks MB1, MB2, MB3 are dual-port memories to allow execution of simultaneous operations with the multiplexing block MUB and arithmetical-logic unit U. On the other hand, single-port memories are possible using a clock frequency doubled with respect to the clock frequency associated with the dual-port memory, and using a time interval of the clock signal to acquire data D in the buffer DBR and the subsequent time interval of the clock signal to control reading of the data to be processed DU by the arithmetical-logic unit U.

Insert buffer circuits IBR and IBT can be implemented through RAM type memories, wherein information are read and written addressing them with the reference number of the tributary flow F they refer to. Write operation is addressed by the reference number of the tributary flow F elaborated by the arithmetical-logic unit U, read operation by the reference number of the tributary flow F available at that time in the received SDH frame STR or in the transmitted SDH frame STT.

According to the above description the features of the present invention as well as its advantages will be clear.

The control byte drop, insert and elaboration circuit in time division multiplexed frames, specifically SDH frames, has the advantage of employing a memory external to the circuit, since the bytes involved for adapting, termination and monitoring functions of the connections are stored in buffers from which the arithmetical-logic unit sources the data needed for elaboration. In other words, a Digital Signal Processing (DSP) type architecture, which allows the use of memory external to the integrated circuit containing the real drop and insert circuit is used. The advantage of using an external memory consists in the capability of employing large size memories, without subtracting any space nor connection terminals in the gate array. Moreover, the space of said external memory can be advantageously shared by several control bytes drop and insert circuits according to the present invention.

Since up to their elaboration time the data are stored in buffers, the control byte drop, insert and elaboration circuit according to the present invention can advantageously execute drop, elaboration and insert operations, taking advantage of the whole frame transit time, including payload time, with the result of a more rational and efficient circuit utilization.

It is obvious that many changes are possible for the man skilled in the art to the control bytes drop, insert and elaboration circuit in time division multiplexed frames, specifically SDH frames, described above by way of example, without departing from the novelty spirit of the innovative idea, and it is also clear that in practical actuation of the invention the components may often differ in form and size from the ones described and be replaced with technical equivalent elements.

Drop buffer circuits may be obtained e.g. by FIFO shifters instead of positional buffers. In FIFO shifters overhead path data to be elaborated are written according to their incoming order and subsequently read in the same order by the arithmetical-logic unit. When FIFO shifters are used, the maximum bit length for each word has to be provided, e.g. 16 bits in the instance of a VC1, whereas the depth of the FIFO shifter clearly depends on the elaboration speed of the arithmetical-logic unit in conjunction with the external RAM memory.

## Claims

1. Circuit (1) for dropping, inserting and elaborating control bytes in time division multiplexed frames, specifically SDH frames, where said control bytes are contained in overhead sequences of container sequences representing tributary flows multiplexed in said time division multiplexed frames, said drop, insert and elaboration circuit elaborating said control bytes to build operating statuses of the tributaries and using storing means for such an elaboration, characterized in that said circuit (1) for dropping, inserting and elaborating control bytes comprises an arithmetical logic unit (U) operating in association with storing means comprising an external memory circuit (ERM).

2. Circuit according to claim 1, characterized in that it further comprises buffer storing means (DBR, DBT, IBR, IBT) appropriate for temporary storing of the control bytes of said overhead sequence (POR, POR', POT, POT').

3. Circuit according to claim 2, characterized in that said buffer storing means (DBR, DBT, IBR, IBT) are connected between the carrying lines (RL, TL) of time division multiplexed frames and the arithmetical logic unit (U).

4. Circuit according to claim 3, characterized in that said arithmetical logic unit (U) writes and reads operation statuses (SR, SW) related to the tributary flows (F) in the external memory circuit (ERM).

5. Circuit according to claim 4, characterized in that buffer storing means (DBR, DBT, IBR, IBT) comprise drop buffer storing means (DBR, DBT) and insert buffer storing means (IBR, IBT).

6. Circuit according to claim 5, characterized in that said drop buffer storing means (DBR, DBT) are obtained through positional buffer circuits.

7. Circuit according to claim 5, characterized in that said drop buffer storing means (DBR, DBT) are obtained through FIFO type shifters.

8. Circuit according to claim 4, characterized in that the arithmetical logic unit (U) comprises elaboration means (OM, MP, IRN) appropriate to execute adapting, termination and monitoring functions (FU) for SDH frames.

9. Circuit for dropping, inserting and elaborating control bytes in time division multiplexed frames, specifically SDH frames, where said control bytes are contained in overhead sequences of container sequences representing time-multiplexed tributary flows in said frames, said drop, insert and elaboration circuit elaborating said control bytes to build operating statuses of the tributary flows and using storing means for such elaboration, characterized in that an arithmetical logic unit (U) is used according to a Digital Signal Processing architecture to elaborate control bytes.
